# EUROPEAN PATENT SPECIFICATION

(11) **EP 3 382 592 B1**
(45) Date of publication and mention of the grant of the patent: **17.02.2021**
(21) Application number: 18158583.7
(22) Date of filing: 26.02.2018
(51) Int. Cl.: G06F 21/62, G01D 4/00, G06Q 50/06, G06Q 30/02, H04Q 9/00

(54) **ENERGY DATABASE SYSTEM**
ENERGIEDATENBANKSYSTEM
SYSTÈME DE BASE DE DONNÉES D'ÉNERGIE

(30) Priority: 31.03.2017 JP 2017069655
(43) Date of publication of application: 03.10.2018
(73) Proprietor: Panasonic Intellectual Property Management Co., Ltd., Osaka-shi, Osaka 540-6207 (JP)
(72) Inventor: KAWAUCHI, Akiyoshi, Osaka 540-6207 (JP); SHIRASAWA, Tadanori, Osaka 540-6207 (JP); TAMURA, Yoshikuni, Osaka 540-6207 (JP); MURABAYASHI, Nobuaki, Osaka 540-6207 (JP)
(74) Representative: SSM Sandmair

(56) References cited:
- EP-A1- 2 565 585
- US-A1- 2009 045 976
- US-A1- 2012 330 470

## Description

### BACKGROUND

### 1. Technical Field

The present disclosure relates to an energy database system for managing and monitoring meters which measure usage of utilities such as gas, electricity, and water.

### 2. Description of the Related Art

In the related art, in this type of energy database system, a utility supply company (for example, a gas company) which manages meters and collects charges according to usage and a management system operation company which operates a meter monitoring system monitoring the occurrence of abnormality are often the same company or have a relationship of group companies. Therefore, there is no large obstacle to handling personal information related to a meter.

However, in a case where a utility supply company and a management system operation company are separate companies, for example, a management level of handling personal information differs for each company, and thus there is a case where it is hard for the utility supply company to leave personal information to the management system operation company.

As a countermeasure against this, Japanese Patent Unexamined Publication No. 2011-209974 proposes a method in which personal information is stored and preserved in a distribution manner in order to prevent leakage of the personal information, and the personal information is identified on the basis of association information in a case where the personal information is necessary.

According to the method disclosed in Japanese Patent Unexamined Publication No. 2011-209974, personal information is formed of pieces of data regarding a plurality of attributes such as a name, an address, an age, and contact information, and a unique first key is allocated to each of pieces of data into which the personal information is divided for the respective attributes on the basis of a first algorithm. A first storage which stores a pair of each first key and data corresponding to the first key at a random position is provided, and a unique second key is allocated to the personal information on the basis of a second algorithm for further encryption. A second storage which stores a pair of each second key and encrypted data, and a third storage which stores association information among the first keys, the second keys, the first algorithm, the second algorithm, and data forming information, are provided.

Therefore, if personal information is to be acquired, all pieces of storage content of the first storage to the third storage are required, and thus it is possible to prevent leakage of the personal information.

EP 2 565 585 A1 discloses a method for managing utility meter communications within a network comprising a plurality of utility meters each associated and connected to at least one utility management center through at least one intermediate data concentrator, each utility meter being identified by a utility meter identifier Uid and being adapted to produce and send utility meter messages DTUp_{u,c} to a destination data concentrator identified by a data concentrator identifier DCid, each destination data concentrator being adapted to produce and send reports to said management center identified by a management center identifier Pid, the method comprising the steps of: - sending a utility meter message DTUp_{u,c} from a utility meter to said destination data concentrator, said utility meter message DTUp_{u,c} including: a metering data measurement DTup reported by said utility meter, said utility meter identifier Uid, said destination data concentrator identifier DCid and said management center identifier Pid, - determining, on the basis of one or several metering data measurements DTup, a metering counter differential consumption value ΔCPT calculated by difference of two metering counter consumption indexes CPT measured by said utility meter within a time period interval ΔDP, sending, from the destination data concentrator towards the utility management center to which said utility meter is associated, a report containing at least said metering counter differential consumption value ΔCPT.

### SUMMARY

The scope of the invention is defined in the appended claims. Any reference to "embodiment(s)", "example(s)" or "aspect(s) of the invention" in this description not falling under the scope of the claims should be interpreted as illustrative example(s) for understanding the invention.

The related art is advantageous as a countermeasure against leakage of personal information since personal information is distributed and stored. However, in a case where a monitoring system is operated by two separate companies such as a utility supply company which manages meters and personal information of users associated with the meters and a management system operation company which operates a meter monitoring system without managing personal information, there are the following problems. In other words, the management system operation company cannot easily identify personal information, and thus cannot calculate value-added information such as energy saving advice which can be derived from a gas use situation or a use tendency by using personal data such as an address or an age through analysis of data regarding usage of a utility. Thus, it is hard to give a fine energy saving advice.

The present disclosure provides an energy database system which enables an operation company to monitor meters without handling personal information, and can propose value-added information such as energy saving advice through data analysis.

An energy database system of the present disclosure includes a second server operated by a business operator making a contract with a user of a utility such as gas, electricity, or water and collecting charges according to usage of the utility. The energy database system includes a measurement device provided in a residence of the user and measuring usage of the utility, and a first server operated by a business operator receiving usage measured by the measurement device and transmitting the usage to the second server. The second server manages personal information for identifying the user, and unique association information allocated to the personal information, and the first server and the measurement device also transmit the association information when transmitting the usage.

With this configuration, personal information is managed by only the second server, and the first server can monitor usage of a utility without managing personal information.

The present disclosure can provide an energy database system which enables a management system operation company which is different from a utility supply company of gas, electricity, or water to monitor a meter without handling personal information, and to propose value-added information such as energy saving advice through data analysis.

### BRIEF DESCRIPTION OF THE DRAWINGS

FIG. 1 is a block diagram of an energy database system in a first exemplary embodiment of the present disclosure;
FIG. 2 is a block diagram of an energy database system in a second exemplary embodiment of the present disclosure;
FIG. 3 is a diagram illustrating an example of attribute information in the second exemplary embodiment of the present disclosure;
FIG. 4 is a block diagram of an energy database system in a third exemplary embodiment of the present disclosure; and
FIG. 5 is a block diagram of an energy database system in a fourth exemplary embodiment of the present disclosure.

### DETAILED DESCRIPTION

Hereinafter, exemplary embodiments of the present disclosure will be described with reference to the drawings. The present disclosure is not limited to the exemplary embodiments.

### First Exemplary Embodiment

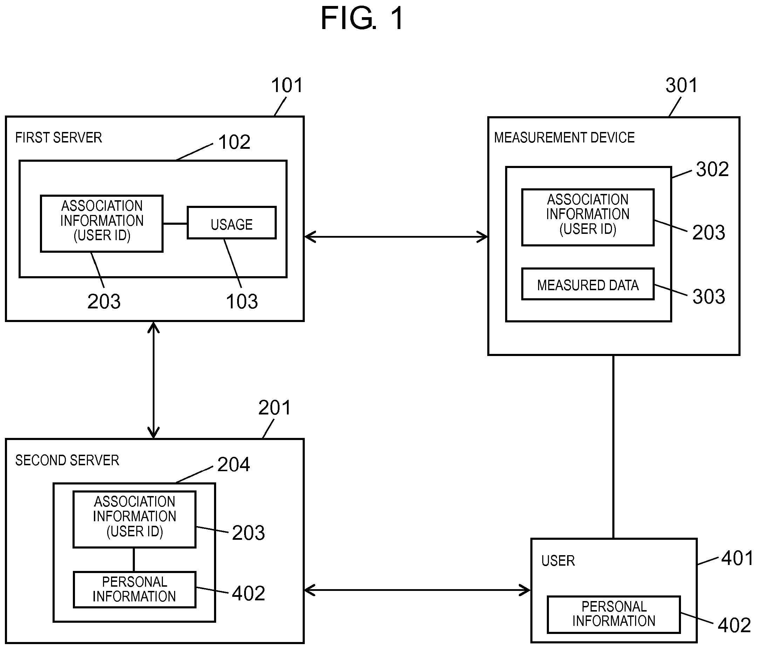

FIG. 1 is a block diagram of an energy database system in a first exemplary embodiment of the present disclosure.

In FIG. 1, first server 101 is operated by a business operator (hereinafter, referred to as a management system operation company) who manages usage of an utility such as electricity, gas, or water, and acquires usage of an utility such as electricity, gas, or water from a measurement device which will be described later.

Second server 201 is operated by a business operator (hereinafter, referred to as a utility supply company) who supplies an utility, such as a gas company or electricity company, and manages personal information 402 such as the name, the age, the sex, an address, and a family structure of a customer who is user 401 of the utility. There are a plurality of users 401, but, for convenience, only a single user is illustrated in FIG. 1.

Measurement device 301 is provided in a residence of user 401 making a contract with the utility supply company, and measures usage of the utility in the residence of user 401.

In the configuration, personal information 402 of user 401 and a user ID as unique association information 203 associated with personal information 402 are stored in storage 204 of second server 201. The user ID may be replaced with a meter ID assigned to each measurement device 301, and, in this case, a meter ID is not required to be separately managed, and thus management can be simplified.

Association information 203 is also stored in storage 102 of first server 101 and storage 302 of measurement device 301.

Measurement device 301 adds association information 203 to measured data 303 obtained by measuring the usage of the utility, and transmits the measured data to first server 101.

First server 101 manages measured data 303 transmitted from measurement device 301 as usage for each piece of association information 203, and transmits usage 103 and association information 203 to second server 201 periodically or in response to a request from the second server.

Second server 201 charges user 401 identified from personal information 402 and association information 203 for usage of the utility on the basis of association information 203 and usage 103 received from first server 101.

In the above-described configuration, the management system operation company managing first server 101 can manage usage 103 of the utility on the basis of measured data 303 received from measurement device 301 without managing personal information 402 of user 401.

On the other hand, the utility supply company managing second server 201 can entrust meter reading work to the management system operation company which is a third party without providing personal information 402 of user 401.

A plurality of second servers may be provided for a single first server. In this case, even if the management system operation company which is a third party operating the first server is entrusted with meter reading work by a plurality of utility supply companies which are operation companies of the second servers, personal information is not required to be managed. Thus, it is possible to simplify an operation of the first server.

### Second Exemplary Embodiment

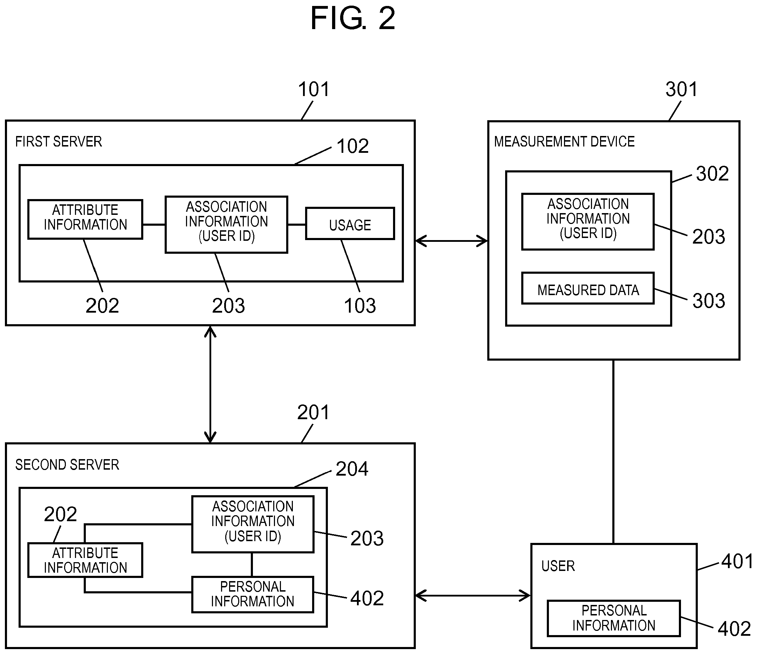

FIG. 2 is a block diagram of an energy database system in a second exemplary embodiment of the present disclosure.

The present exemplary embodiment is different from the first exemplary embodiment in that attribute information 202 based on personal information 402 is held in the second server, and a constituent element with the same reference numeral as in the first exemplary embodiment has the same structure, and thus description thereof will not be repeated.

Attribute information 202 in the present exemplary embodiment is abstracted information which cannot be used to identify an individual with only the information. In a case of an address in personal information 402, attribute information 202 is a town name or the like excluding a house number, or a superior name thereto, and, in a case where of an age, the attribute information is information indicating an age group such as forties or fifties. Attribute information 202 is intended to be used as necessary information when data analysis which will be described later is performed.

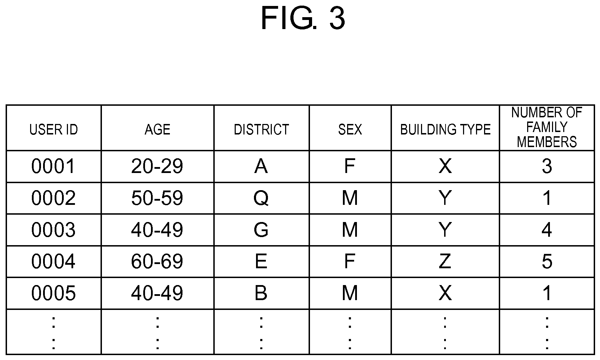

FIG. 3 is a diagram illustrating an example of attribute information 202. Attribute information 202 is information which is obtained from personal information 402, and is information which is managed along with association information 203 and cannot be used to identify an individual with only the information. In FIG. 3, for each user ID which is the association information 203, an age is a value from which only an age group can be recognized, a district is data excluding a house number identified from an address, and M indicates a male, and F indicates a female in relation to a sex. The building type is information for identifying a building such as a detached house, a condominium, or a wooden building.

Attribute information 202 is preserved in first server 101, and second server 201 performs various analysis on the basis of usage 103 and attribute information 202.

For example, in proposing value-added information such as energy saving advice, a use situation or a use tendency of a utility is analyzed on the basis of attribute information 202 such as an address or an age, and thus data analysis can be performed without using personal data.

### Third Exemplary Embodiment

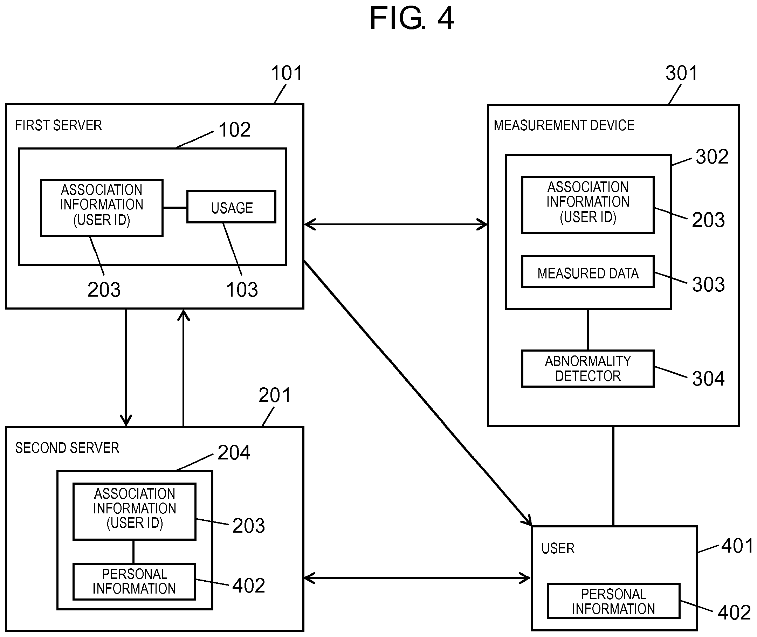

FIG. 4 is a block diagram of an energy database system in a third exemplary embodiment of the present disclosure.

The present exemplary embodiment is different from the first exemplary embodiment in that measurement device 301 includes abnormality detector 304 which detects abnormality on the basis of measured data 303 of a utility, and a constituent element with the same reference numeral as in the first exemplary embodiment has the same structure, and thus description thereof will not be repeated.

Here, abnormality detector 304 has a function of detecting abnormality by monitoring a use state on the basis of measured usage of the utility. For example, if where measurement device 301 is a gas meter, abnormality detector 304 has, as an abnormality detection function, a leakage detection function of detecting leakage in a case where a flow rate of a gas within a identific flow rate range is continuously detected. Abnormality detector 304 has an abnormality detection function such as a maximum flow rate detection function of detecting that a measured flow rate exceeds an expected maximum flow rate, or a long-period-use detection function of detecting that a flow rate is measured for a long period of time exceeding an expected maximum use time.

If abnormality detector 304 detects abnormality, measurement device 301 notifies first server 101 of the occurrence of the abnormality. First server 101 notified of the occurrence of the abnormality does not hold personal information 402 of user 401, and thus inquires of second server 201 about contact information such as a telephone number along with association information 203 and informs the contact information transmitted from second server 201 of the occurrence of the abnormality.

With this configuration, first server 101 can inquire of second server 201 about contact information via association information 203 and notify the contact information as necessary without holding personal information 402 such as a telephone number. Needless to say, first server 101 does not hold the telephone number and handles the telephone number as transitory data.

### Fourth Exemplary Embodiment

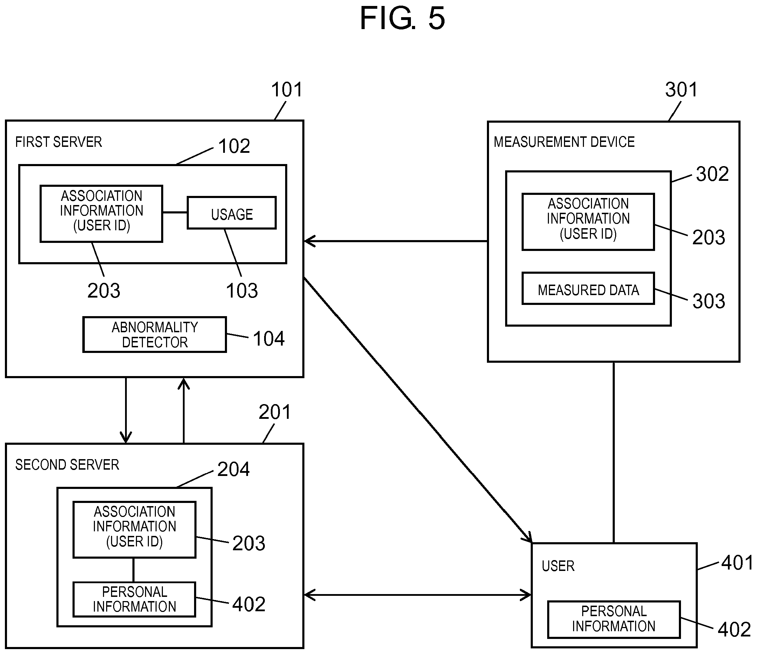

FIG. 5 is a block diagram of an energy database system in a fourth exemplary embodiment of the present disclosure.

The present exemplary embodiment is different from the first exemplary embodiment in that first server 101 includes abnormality detector 104 which detects abnormality on the basis of usage of a utility, and a constituent element with the same reference numeral as in the first exemplary embodiment has the same structure, and thus description thereof will not be repeated.

Abnormality detector 104 has a function of detecting that usage which is different from usage during normal times occurs on the basis of measured data 303 transmitted from measurement device 301. For example, if a utility is a gas, abnormality detector 104 has a function of monitoring a use situation which is different from that during normal times, such as whether or not gas leakage occurs, or whether or not there is an abnormal high flow rate, and notifying user 401 of the occurrence of abnormality in a case where it is determined that the abnormality occurs.

Since first server 101 does not hold personal information 402 of user 401, in a case where abnormality detector 104 detects abnormality, first server 101 inquires of second server 201 about contact information such as a telephone number along with association information 203 and informs the contact information transmitted from second server 201 of the occurrence of the abnormality.

According to the above-described configuration, first server 101 can determine abnormality by using a large amount of information (for example, flow rate data accumulated in a time series), and can thus perform abnormality detection with high accuracy, compared with a case where measurement device 301 performs abnormality detection described in the third exemplary embodiment alone.

For example, a use pattern for each time period of each day may be stored, and it may be determined that a certain abnormality occurs in a case where a differing use pattern occurs.

In the present exemplary embodiment, a description has been made of a configuration in which abnormality detector 104 is provided in only first server 101, but abnormality detector 304 may also be provided in measurement device 301 in the same manner as in the third exemplary embodiment. In this configuration, if measurement device 301 is a gas meter, in a case where the maximum flow rate such as an expected flow rate or higher is detected, a gas can be blocked by using a blocking device (not illustrated) built into the gas meter, and thus safety is improved.

As described above, an energy database system in a first disclosure includes a second server operated by a business operator making a contract with a user of a utility such as gas, electricity, or water and collecting charges according to usage of the utility. The energy database system includes a measurement device provided in a residence of the user and measuring usage of the utility, and a first server operated by a business operator receiving usage measured by the measurement device and transmitting the usage to the second server. The second server manages personal information for identifying the user, and unique association information allocated to the personal information, and the first server and the measurement device also transmit the association information when transmitting the usage.

With this configuration, personal information is managed by only the second server, and the first server can monitor usage of a utility without managing personal information.

In the energy database system in a second disclosure according to the first disclosure, the second server may be formed of a plurality of servers respectively operated by business operators.

With this configuration, even in a case where a business operator operating the first server is entrusted with meter reading work by a plurality of utility supply companies, it is not necessary to manage personal information.

An energy database system in a third disclosure includes a second server operated by a business operator making a contract with a user of a utility such as gas, electricity, or water and collecting charges according to usage of the utility. The energy database system includes a measurement device provided in a residence of the user and measuring usage of the utility, and a first server operated by a business operator receiving usage measured by the measurement device and providing a service based on the usage. The second server stores personal information for identifying the user, and unique association information allocated to the personal information, generates attribute information which cannot be used to identify an individual from the personal information, and transmits the attribute information to the first server, and the measurement device also transmits the association information when transmitting the usage. There may be a configuration in which the first server manages usage of the utility for each piece of the association information, and transmits a result of analyzing a use situation of the utility corresponding to the attribute information to the second server as a service.

With this configuration, in proposing value-added information such as energy saving advice, a use situation or a use tendency of a utility is analyzed on the basis of the attribute information such as an address or an age, and thus data analysis can be performed without using personal data.

In the energy database system in a fourth disclosure according to, particularly, the third disclosure, the attribute information may include at least one of area information based on an address of the personal information, and age group information based on an age of the personal information.

With this configuration, in proposing value-added information such as energy saving advice, a use situation or a use tendency of a utility is analyzed on the basis of at least one of pieces of attribute information such as area information and age group information, and thus data analysis can be performed without using personal data.

In the energy database system in a fifth disclosure according to the third disclosure or the fourth disclosure, the first server may include an abnormality detector detecting abnormality on the basis of the usage, and, in a case where abnormality is detected by the abnormality detector, the first server may acquire contact information of the user corresponding to the association information from the second server, and notify the user of the occurrence of the abnormality as a service.

With this configuration, the first server can determine abnormality by using a large amount of information (for example, flow rate data accumulated in a time series), and can thus perform abnormality detection with high accuracy.

In the energy database system in a sixth disclosure according to any one of the first to fourth disclosures, the measurement device includes an abnormality detector detecting abnormality on the basis of usage. The measurement device has a function of blocking the supply of the utility and notifying the first server of the occurrence of abnormality in a case where the abnormality detector detects the abnormality. In a case where the notification is received from the measurement device, the first server may acquire contact information of the user from the second server, and may notify the user of the occurrence of the abnormality.

With this configuration, if the measurement device is a gas meter, in a case where the maximum flow rate such as an expected flow rate or higher is detected, a gas can be blocked by using a blocking device (not illustrated) built into the gas meter, and thus safety can be improved.

As mentioned above, the energy database system according to the present disclosure has the usefulness that a management system operation company can monitor a meter without handling personal information, and can propose value-added information such as energy saving advice through data analysis.

### REFERENCE MARKS IN THE DRAWINGS

- 101:: first server
- 103:: usage
- 104:: abnormality detector
- 201:: second server
- 202:: attribute information
- 203:: association information
- 301:: measurement device
- 303:: measured data
- 304:: abnormality detector
- 401:: user
- 402:: personal information

## Claims

1. An energy database system comprising:
a second server (201) that is operated by a business operator making a contract with a user of a utility such as gas, electricity, or water and collecting charges according to usage of the utility;
a measurement device (301) that is provided in a residence of the user and measures usage of the utility; and
a first server (101) that is operated by a business operator receiving usage measured by the measurement device (301) and providing a service based on the usage,
wherein the second server (201) stores personal information for identifying the user, and unique association information allocated to the personal information, generates attribute information which cannot be used to identify an individual from the personal information, and transmits the attribute information to the first server (101),
wherein the measurement device (301) also transmits the association information when transmitting the usage, and
wherein the first server (101) manages usage of the utility for each piece of the association information, and transmits a result of analyzing a use situation of the utility corresponding to the attribute information to the second server (201) as the service.

2. The energy database system of claim 1,
wherein the attribute information includes at least one of area information based on an address of the personal information, and age group information based on an age of the personal information.

3. The energy database system of claim 1 or 2,
wherein the first server (101) includes an abnormality detector that detects abnormality on the basis of the usage, and
wherein, in a case where abnormality is detected by the abnormality detector, the first server acquires contact information of the user corresponding to the association information from the second server (201), and notifies the user of the occurrence of the abnormality as the service.

4. The energy database system of any one of claim 1 or 2,
wherein the measurement device (301) includes an abnormality detector that detects abnormality on the basis of usage, and has a function of blocking supply of the utility and notifying the first server (101) of the occurrence of abnormality in a case where the abnormality detector detects the abnormality, and
wherein, in a case where the notification is received from the measurement device (301), the first server (101) acquires contact information of the user corresponding to the association information from the second server (201), and notifies the user of the occurrence of the abnormality.

## Patentansprüche

1. Energiedatenbanksystem, enthaltend:
einen zweiten Server (201), der von einem Unternehmer betrieben wird, der einen Vertrag mit einem Nutzer einer Versorgungseinrichtung wie zum Beispiel Gas, Elektrizität oder Wasser abschließt und gebührengemäß Verbrauch der Versorgungseinrichtung vereinnahmt; ein Messgerät (301) das an einem Wohnsitz des Nutzers bereitgestellt ist und einen Verbrauch der Versorgungseinrichtung misst; und
eine ersten Server (101), der von einem Unternehmer betrieben wird, der einen von dem Messgerät (301) gemessenen Verbrauch empfängt und eine Dienstleistung basierend auf dem Verbrauch bereitstellt,
wobei der zweite Server (201) persönliche Informationen zum Identifizieren des Nutzers und eindeutige Zuordnungsinformationen, die der persönlichen Information zugewiesen sind, speichert, Attributinformationen, die nicht verwendet werden, um ein Individuum aus den persönlichen Informationen zu identifizieren, erzeugt und die Attributinformationen an dem ersten Server (101) überträgt,
wobei das Messgerät (301) auch die Zuordnungsinformationen überträgt, wenn es den Verbrauch überträgt, und
wobei der erste Server (101) einen Verbrauch der Versorgungseinrichtung für jede der Zuordnungsinformationen verwaltet und ein Ergebnis einer Analyse einer Verbrauchssituation der Versorgungseinrichtung, der den Attributinformationen entspricht, an den zweiten Server (201) als Service überträgt.

2. Energiedatenbanksystem gemäß Anspruch 1,
bei dem die Attributinformationen wenigstens eines von Gebietsinformationen basierend auf einer Adresse der persönlichen Informationen und Altersgruppeninformationen basierend auf einem Alter der persönlichen Informationen enthält.

3. Energiedatenbanksystem gemäß Anspruch 1 oder 2,
bei dem der erste Server (101) einen Anomaliedetektor enthält, der eine Anomalie auf Basis des Verbrauchs detektiert, und
bei dem, wenn eine Anomalie von dem Anomaliedetektor detektiert wird, der erste Server Kontaktinformationen des Nutzers, die den Zuordnungsinformationen entsprechen, von dem zweiten Server (201) erhält und den Nutzer vom Auftreten der Anomalie als Service in Kenntnis setzt.

4. Energiedatenbanksystem gemäß irgendeinem der Ansprüche 1 oder 2,
bei dem das Messgerät (301) einen Anomaliedetektor enthält, der eine Anomalie auf Grundlage des Verbrauchs detektiert und eine Funktion hat, mit der die Zufuhr der Versorgungseinrichtung blockiert wird und mit der der erste Server (101) vom Auftreten der Anomalie in Kenntnis gesetzt wird, wenn der Anomaliedetektor die Anomalie detektiert, und wobei, wenn die Mitteilung von dem Messgerät (301) empfangen wird, der erste Server (101) Kontaktinformationen des Benutzers, die den Zuordnungsinformationen entsprechen, von dem zweiten Server (201) erhält und den Nutzer vom Auftreten der Anomalie in Kenntnis setzt.

## Revendications

1. Système de base de données d'énergie comprenant :
un second serveur (201) qui est exploité par un opérateur commercial passant un contrat avec un utilisateur d'un service d'utilité tel que le gaz, l'électricité ou l'eau et collectant les frais en fonction de l'utilisation du service d'utilité ;
un dispositif de mesure (301) qui est fourni dans une résidence de l'utilisateur et mesure l'utilisation de du service d'utilité ; et
un premier serveur (101) qui est exploité par un opérateur commercial recevant une utilisation mesurée par le dispositif de mesure (301) et fournissant un service basé sur l'utilisation,
dans lequel le second serveur (201) stocke des informations personnelles pour identifier l'utilisateur et des informations d'association uniques allouées aux informations personnelles, génère des informations d'attribut qui ne peuvent pas être utilisées pour identifier un individu à partir des informations personnelles, et transmet les informations d'attribut au premier serveur (101),
dans lequel le dispositif de mesure (301) transmet également les informations d'association lors de la transmission de l'utilisation, et
dans lequel le premier serveur (101) gère l'utilisation du service d'utilité pour chaque élément des informations d'association, et transmet un résultat de l'analyse d'une situation d'utilisation du service d'utilité correspondant aux informations d'attribut au second serveur (201) en tant que service.

2. Système de base de données d'énergie selon la revendication 1,
dans lequel les informations d'attribut comprennent au moins une parmi une information de zone basée sur une adresse à partir des informations personnelles, et une information de groupe d'âge basées sur l'âge à partir des informations personnelles.

3. Système de base de données d'énergie selon la revendication 1 ou 2,
dans lequel le premier serveur (101) comprend un détecteur d'anomalie qui détecte une anomalie sur la base de l'utilisation, et
dans lequel, dans un cas où une anomalie est détectée par le détecteur d'anomalie, le premier serveur acquiert les informations de contact de l'utilisateur correspondant aux informations d'association à partir du second serveur (201), et notifie à l'utilisateur l'occurrence de l'anomalie en tant que service.

4. Système de base de données d'énergie selon l'une quelconque des revendications 1 ou 2,
dans lequel le dispositif de mesure (301) comprend un détecteur d'anomalie qui détecte une anomalie sur la base de l'utilisation, et a pour fonction de bloquer la fourniture du service d'utilité et d'avertir le premier serveur (101) de l'occurrence d'une anomalie dans un cas où le détecteur d'anomalie détecte l'anomalie, et
dans lequel, dans un cas où la notification est reçue à partir du dispositif de mesure (301), le premier serveur (101) acquiert les informations de contact de l'utilisateur correspondant aux informations d'association à partir du deuxième serveur (201), et notifie à l'utilisateur l'occurrence de l'anomalie.
